# EUROPÄISCHE PATENTSCHRIFT

(11) **EP 0 546 246 B1**
(45) Veröffentlichungstag und Bekanntmachung des Hinweises auf die Patenterteilung: **24.04.1996**
(21) Anmeldenummer: 92110744.7
(22) Anmeldetag: 25.06.1992
(51) Int. Cl.: F16L 23/14

(54) **Kanalteilstück**
Duct-section
Section de canal

(30) Priorität: 11.12.1991 DE 4140870
(43) Veröffentlichungstag der Anmeldung: 16.06.1993
(73) Patentinhaber: Geldner, Siegfried, D-83059 Kolbermoor (DE)
(72) Erfinder: Geldner, Siegfried, D-83059 Kolbermoor (DE)

(56) Entgegenhaltungen:
- DE-A- 2 313 425
- DE-A- 2 353 625
- DE-A- 2 414 815
- US-A- 3 198 561
- US-A- 3 199 901

## Beschreibung

Die Erfindung betrifft ein Kanalteilstück, insbesondere ein Lüfungs-Kanalteilstück nach dem Oberbegriff des Anspruches 1 bzw. 2.

Derartige Kanalteilstücke werden insbesondere in der Klimatechnik in einem verzweigten Lüftungs-Kanalsystem verwendet. Dabei kommen auch sogenannte Verbindungsbälge oder Kompensatorbälge zum Einsatz, die insbesondere zur Dämpfung des Körperschalles ein nichtmetallisches, in der Regel elastisches Kanalwand-Material umfassen.

Ein gattungsbildendes Kanalteilstück mit einem Kanalverbindungsstück zur Verbindung mit einem nächsten Kanalteilstück ist beispielsweise aus der EP 0 148 286 B1 bekannt geworden. Dieses vorbekannte Kanalverbindungsstück soll gegenüber anderen vorbekannten Lösungen unter Erzielung einer Materialersparnis zumindest eine gleich gute Biegestabilität im Bereich der Flanschverbindung aufweisen. Darüber hinaus soll die vorbekannte Flanschverbindung auch für Kanalteilstücke geeignet sein, die eine balgförmige, also aus elastomeren Werkstoff bestehende Kanalhaut aufweisen.

Die vorbekannte Flanschverbindung umfaßt dazu zwei im Querschnitt senkrecht zueinander stehende Schenkelabschnitte, wobei im Winkelbereich eine etwa im 45° Winkel ausgerichtete Dichtlippe in einer dort vorgesehenen Sicke eingesetzt ist. Die senkrecht zueinander ausgerichteten Schenkel sind an ihrem Ende mit einer Bördelung versehen. Ein Eck-Montagewinkel ist mit seinen Schenkeln in das jeweilige Stirnende eines angrenzenden Profils einsteckbar. Über separate Klammern kann ein zwischen der Klammer und der Bördelung zuvor aufgelegter Randabschnitt eines elastomeren Balges befestigt werden.

Aus der EP 0 282 608 Al ist eine dem gattungsbildenden Stand der Technik weitgehend entsprechende Flanschverbindung gezeigt, die jedoch bogenförmig zur Ermöglichung rohrförmiger Kanalteilstücke geformt ist.

Der Herstellungs- und Montageaufwand bei diesen vorbekannten Kanalteilstücken ist aber gleichwohl immer noch hoch, wobei sich insbesondere bei rechteckförmiger Gestaltung Probleme bezüglich der dichten Einspannung der Kanalhaut, also dem eigentlichen Balg und dem zugehörigen Flanschabschnitt ergeben.

Eine vergleichsweise aufwendige Konstruktion für einen Kompensatorbalg ist beispielsweise auch aus der DE 36 43 062 bekannt geworden.

Ein aus der DE 33 37 810 C2 bekannt gewordener Weichstoffkompensator umfaßt auch in seinen Eckbereichen nur aus Gummi bestehende Einspannflansch-Ecken, die durch Vulkanisation angeformt sind. Derartige Konstruktionen (wie nach dem Stand der Technik überhaupt bekannte Kompensationsbälge) sind stets aus gegossenem oder vulkanisiertem Balgmaterial hergestellt. Der Herstellungsaufwand ist hier auch stets als hoch zu bezeichnen, weshalb in der Regel insbesondere aus gegossenem Gummimaterial bestehende Kompensatorbälge stets nur in vorbestimmten Größen gefertigt werden. Eine Anpassung an individuelle Größen ist nicht oder nur mit unvergleichlich hohem Aufwand möglich.

Schließlich ist ein Verbindungsbalg zur Verbindung von Flanschen eines Lüftungskanals auch aus der DE 28 13 535 Al bekannt geworden. Diese vorbekannte Konstruktion weist im Falle eines im Querschnitt rechteckförmigen Kanalteilstückes ein durchgängiges Flanschprofil auf, welches flach oder auch im Querschnitt winkelförmig gestaltet sein kann. Darauf wird ein Kunststoffprofil aufgesetzt, welches das aus Metall bestehende durchgängige Flanschprofil an dessen Rändern über- und hintergreift, um einen ausreichenden stabilen Sitz zu gewährleisten. An dem Kunststoffprofil ist eine Dichtlippe im mittleren Schenkelbereich angeformt.

Die Kunststoffeinfassungen dienen somit also als Befestigungselement zur Befestigung der Verbindungshaut an den Sletall-Flanschen. Aber auch diese Konstruktion ist aufwendig, da bei der Befestigung der aus Kunststoff bestehenden Anschlußstreifen in den Eckbereich Kunststoffmaterial herausgeschnitten werden muß. Zudem muß das Flanschmaterial in entsprechender Größe zu einen einstückigen geschlossenen Flanschrahmen verbunden werden, was eine problemlose und individuelle Anpassung an einsatzabhängig unterschiedlich große Kanalverbindungsstücke erschwert.

Ein gattungsbildendes Kanalteilstück mit einem Kanalverbindungsstück ist aus dem US-A-3 198 561 bekannt geworden.

Es besteht aus an den Enden des Kanalteilstückes im wesentlichen in der Ebene quer zu dessen Erstreckungsrichtung verlaufenden Flanschprofilen. Diese sind mittels in den Eckbereichen des so gebildeten Anschlußflansches eingesetzten Eck-Montagewinkeln zu einem polygonalen, in der Regel rechteckförmigen Rahmen zusammengefügt. In den Flanschprofilen ist in deren Längsrichtung jeweils eine Sicke ausgebildet. Vorzugsweise ist eine zusätzliche Sicke auch in Fortsetzung zur erstgenannten Sicke in den Eck-Montagewinkeln in einem Teilbogenabschnitt verlaufend vorgesehen. In den Öffnungsbereich dieser Sicken - die in Richtung auf ein nächstfolgendes Kanalteilstück weisen - ist jeweils umlaufend eine Dichtlippe eingesetzt.

Aufgabe der vorliegenden Erfindung ist es, ausgehend von dem zuletzt genannten gattungsbildenden Stand der Technik ein demgegenüber verbessertes Kanalteilstück mit einem geeigneten Kanalverbindungsstück zur Verbindung mit einem nächsten Kanalteilstück zu schaffen, welches problemlos herstellbar ist, eine hohe Dichtigkeit aufweist und zudem eine problemlose Anpassung ermöglicht, wenn die Kanalverbindungsstücke in unterschiedlicher Größe gefertigt werden sollen.

Die Aufgabe wird erfindungsgemäß bezüglich eines im Querschnitt polygonalen Kanalteilstückes gemäß den im Anspruch 1 und bezüglich eines im Querschnitt bogenförmig gestalteten Kanalteilstückes gemäß den im Anspruch 2 angegebenen Merkmalen gelöst. Vorteilhafte Ausgestaltungen der Erfindung sind in den Unteransprüchen angegeben.

Die Erfindung macht sich weiterhin die nach dem Stand der Technik an sich bekannten Vorteile zunutze, wonach beispielsweise ein rechteckförmigens Kanalverbindungsstück aus in entsprechender Größe abgelängten Profilstücken besteht, die mit Ecken-Montagewinkel zu einem geschlossenen Flanschprofil verbindbar sind. Für Balgkonstruktionen, d. h. für eine folienartige Kanalhaut wird als Ausgangsmaterial eine folienartige Materialbahn verwandt, die in entsprechender beliebiger Größe hergestellt und/oder zugeschnitten und dann zu einem in Umfangsrichtung geschlossenen Schlauch zusammengefügt wird. Die so hergestellte Kanalhaut wird erfindungsgemäß dann mit der Dichtlippe verbunden und über die Dichtlippe am Flanschprofil gehalten und verankert.

In einer bevorzugten Ausführungsform der Erfindung umfaßt die Dichtlippe einen Verbindungsschenkel, an welchem die Kanalhaut vorzugsweise durch Frequenzschweißen dicht angebracht wird, wobei der Verbindungsschenkel in unmittelbarer Verlängerung, also parallel zur Dichtfläche der Dichtlippe oder vorzugsweise in einem Winkelbereich um 60° gegenüber der senkrecht zur Erstreckungsrichtung der Kanalteilstücke verlaufenden Verbindungs- oder Flanschfläche ausgerichtet ist.

In einer besonders bevorzugten vereinfachten Ausführungsform können die einzelnen Profilstücke im Eckbereich auf Gehrung geschnitten und mittels eines von hinten her eingesetzten Eckwinkels gegeneinander gesichert werden. Dies ist noch kostengünstiger. Bevorzugt wird insbesondere bei dieser Ausführungsform der Innenwandabschnitt der Sicke vom eigentlichen Gehrungsschnitt jeweils ausgehend in einem geringen Wegbereich weggelassen, d.h. weggeschnitten oder ausgestanzt, um hier für die einzulegende Dichtlippe einen größeren Bogenabschnitt mit größerem Radius zu ermöglichen.

In einer besonders bevorzugten Ausführungsform der Erfindung wird für die Dichtlippe selbst beispielsweise nur eine Rundschnur verwandt, die aus den unterschiedlichsten Materialien gebildet sein kann und nicht zwingend aus elastomerem Werkstoff bestehen muß. Auch eine Rundschnur selbst aus einem Stahlseil ist möglich, wobei die Außenhaut in geeigneter Weise an der Rundschnur befestigt wird. Möglich ist das Umwickeln der Rundschnur und das Verschweißen des herumgelegten Abschnittes mit dem vorlaufenden Abschnitt der Außenhaut oder durch andere geeignete Verbindungsmechanismen. Dies bietet Vorteile vor allem bei Verwendung der Lüftungskanalstücke im sehr hohen Temperaturbereich. Zudem wird für diese Ausführungsform lediglich ein flacher einzusetzender Eckwinkel benötigt, so daß aufwendigere Prägungs- und Tiefziehmaßnahmen, wie bei dem vorstehend erläuterten Ausführungsbeispiel, wegfallen können.

Weitere Vorteile und Einzelheiten der Erfindung ergeben sich nachfolgend aus den anhand von Zeichnungen dargestellten Ausführungsbeispielen. Dabei zeigen im einzelnen:
- Figur 1 :: eine schematische auszugweise rückwärtige Draufsicht auf zu einem Rechteck verbundenen Flanschprofilen mit einem eingesetzten Eck-Montagewinkel vor der Befestigung der Kanalhaut und der Dichtlippe;
- Figur 2 :: eine schematische Querschnittsdarstellung auf das Profil längs der Linie II - II in Figur 1 ohne eingesetzte Dichtlippe;
- Figur 3 :: eine entsprechende Darstellung zu Figur 2, allerdings mit eingesetzter Dichtlippe und an der Dichtlippe befestigter Kanalhaut;
- Figur 4 :: eine schematische vergrößerte Querschnittdarstellung der in Figur 3 eingesetzten Dichtlippe mit Verankerungsabschnitt für die Kanalhaut;
- Figur 5 :: eine rückwärtige Seitendarstellung des in Figur 1 eingesetzten Montagewinkels;
- Figur 6 :: eine Querschnittdarstellung längs der Linie VI - VI in Figur 1 bezüglich des Eck-Montagewinkels.;
- Figur 7 :: eine Seitendarstellung eines Eckwinkels für ein anderes Ausführungsbeispiel;
- Figur 8 :: ein weiteres Ausführungsbeispiel mit dem in Figur 7 dargestellten Eckwinkel;
- Figur 9 :: eine Querschnittsdarstellung durch eine Rundschnur als Dichtlippe mit umgelegter Außenhaut;
- Figur 10 :: ein zu Figur 9 abgewandeltes Ausführungsbeispiel.

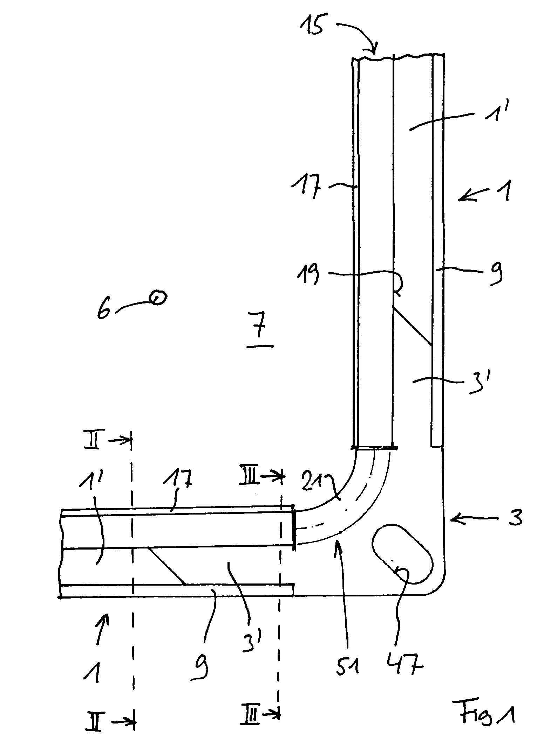

In Figur 1 ist auszugsweise der Eckbereich einer Flanschprofil-Anordnung gezeigt, worüber zwei Kanalverbindungsstücke miteinander verbunden werden können.

Die Darstellung in Figur 1 umfaßt dabei die rückwärtige Ansicht zweier rechtwinklig zueinander ausgerichteter Flanschprofile 1, die über einen Eck-Montagewinkel 3 miteinander verbunden sind. Insgesamt wird dadurch ein rechteckförmiger Flanschprofil-Rahmen gebildet, wenn die Montagewinkel 90° aufweisen. Grundsätzlich könnten bei anders gewählten Montagewinkeln 3 auch andere polygonale Flansch-Konstruktionen verwirklicht werden.

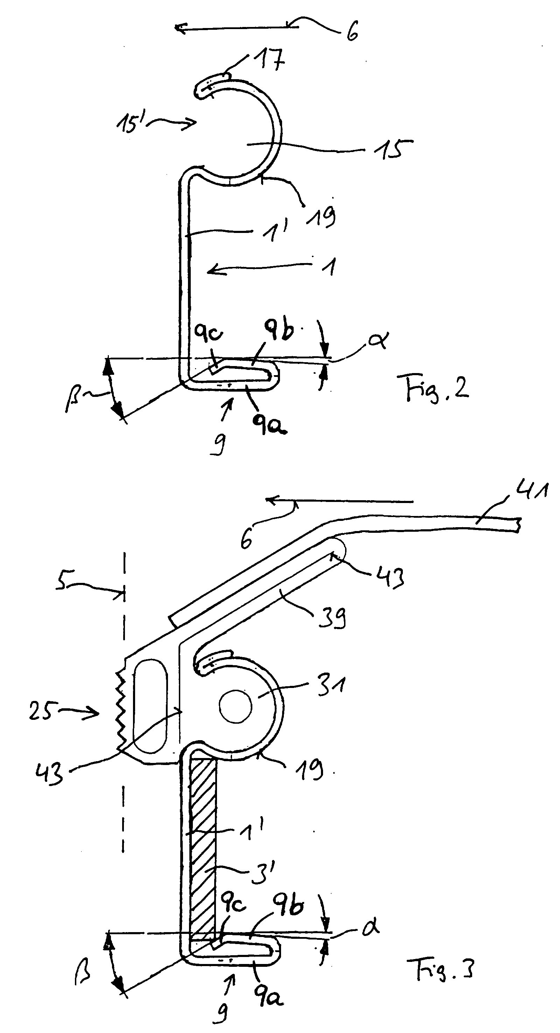

Wie aus Figur 1 und Figur 2 hervorgeht, umfaßt das jeweilige Flanschprofil 1 einen zu einer Verbindungs- oder Flanschprofilebene 5 parallel in Figur 1, also parallel zur Zeichenebene verlaufenden Flanschschenkel 1', der an seinem außenliegenden Bereich, also gegenüberliegend zum eigentlichen Kanal oder Kanalinnenraum 7 mit einem Klemmbügel 9 versehen ist, der im wesentlichen einen von der Verbindungs- oder Flanschebene 5, die senkrecht zur Erstreckungsrichtung 6 des Kanalteilstückes verläuft, in Figur 1 also senkrecht zur Zeichenebene, nach hinten in Richtung des zugehörigen Kanalteilstückes rechtwinklig verlaufenden ersten Klemmbügelabschnitt 9a, einen daran anschließenden auf dem Flanschschenkel 1' wieder zurückverlaufenden zweiten Klemmbügelabschnitt 9b und einen nochmals gleichwinklig dazu ausgerichteten dritten Klemmbügelabschnitt 9c aufweist. Auf die Funktion dieses Klemmbügels 9 wird nachfolgend noch eingegangen.

Dem eigentlichen Kanal 7 zugewandt, also am innenliegenden Bereich der Flanschprofile 1 ist eine in Richtung der Verbindungsebene 5, also in Richtung eines benachbarten nächsten anzubauenden Kanalverbindungsstückes hin offene Sicke 15 eingebracht. Die innenliegende Begrenzungswand 17 der Sicke 15 ist zur Erzielung eines nicht scharfen runden Anlageabschnittes nach hinten hin umgebördelt.

Grundsätzlich könnte sich hier ein im wesentlichen rechtwinklig in Richtung des zugehörigen Kanalteilstückes verlaufender weiterer Flanschschenkel anschließen, der aber grundsätzlich nicht notwendig und im gezeigten Ausführungsbeispiel auch nicht vorgesehen ist.

Aus Figur 5 ist in Draufsicht der Eck-Montagewinkel 3 mit seinen jeweils senkrecht zueinander verlaufenden Steckschenkeln 3' gezeigt.

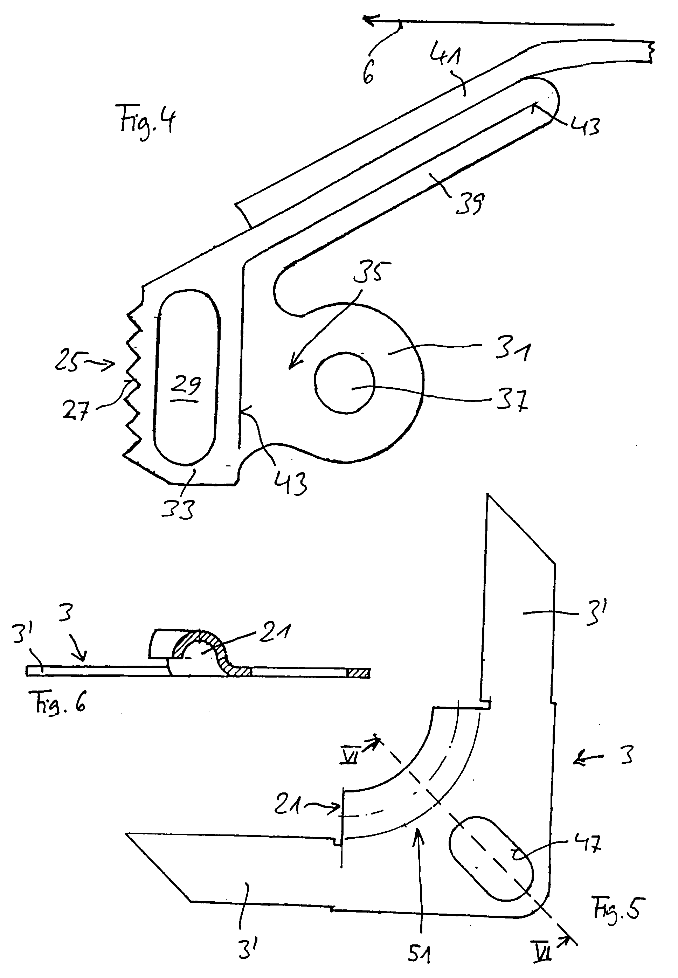

Die Steckschenkel 3' weisen eine ausreichende Länge und eine Höhe und Breite dergestalt auf, daß sie zwischen dem Klemmbügel 9 und dem gegenüberliegenden Sickenwand-Abschnitt 19 nach Art eines Schnappverschlusses klemmend gehalten werden, wie dies auch aus Figur 1 und 3 ersichtlich ist. Bevorzugt ist dabei der jeweilige Steckschenkel 3' von hinten her, also quer zur Verbindungsebene 5, zwischen Klemmbügel 9 und Sickenwand-Abschnitt 19 klemmend einsteckbar. Dazu ist der zweite Klemmbügelabschnitt 9b zumindest in einem geringen Winkel von beispielsweise 0,5° bis 5°, vorzugsweise um 0,5° bis 2° in Richtung zum Kanal 7 hin in Einsteckrichtung aufgestellt und der sich daran anschließende dritte Klemmbügelabschnitt 9c ist demgegenüber wieder mit seinem auf die Flanschebene 5 zulaufenden freien Ende vom Kanal-Innenraum 7 weg nach außen winklig ausgerichtet, vorzugsweise in einem Winkelbereich von 5° bis 70°, vorzugsweise 20° bis 60°, insbesondere um 30°. In diesem dritten Klemmabschnitt kann der entsprechende Steckschenkel 3' des Eck-Montagewinkels 3 bevorzugt unter klemmender Vorspannung in unmittelbarer vollflächiger Anlage zwischen der Seitenwand der Steckschenkels 3' und der rückwärtigen Begrenzungswand des Flanschprofiles 1 gehalten werden. (Figur 3).

Ferner ist dem Eck-Montagewinkel ebenfalls eine Sicke 21 angeformt bzw. eingeprägt, die eine bogenförmige Verbindung von der Sicke 15 des einen Flanschprofiles 1 zur Sicke 15 eines nächsten Flanschprofiles 1 bildet.

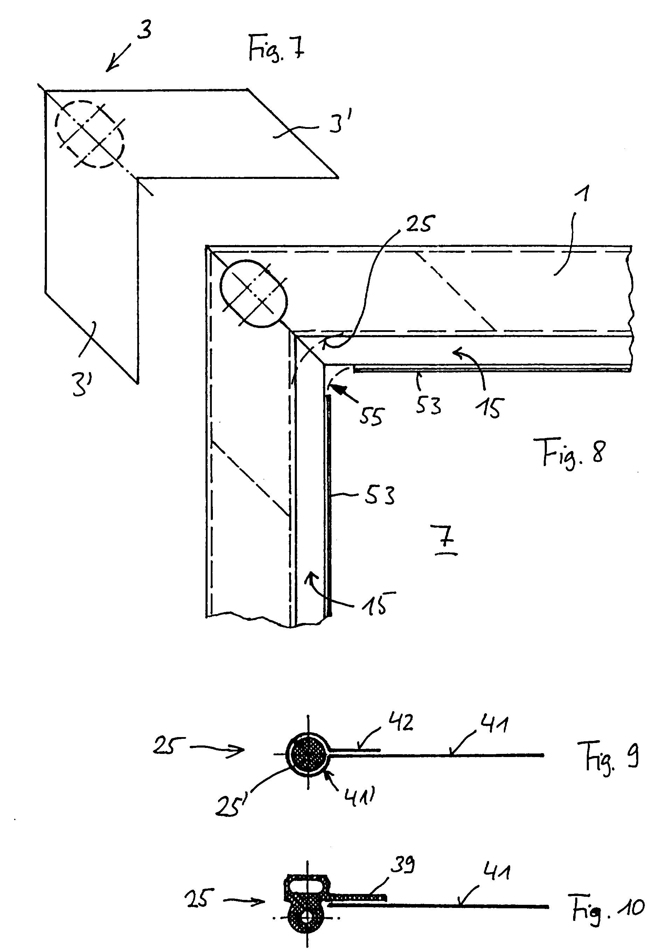

In dieser fortlaufenden Sicke 15, 21 ist umlaufend eine Dichtlippe (Figur 4) 25 eingesetzt, die einen mit einer Längsriffelung 27 versehenen Dicht- und Anlageabschnitt zu einer nächsten benachbarten Dichtlippe 25 eines nächsten Kanalverbindungsstückes aufweist. Im Inneren des Dichtlippenkörpers ist eine erste Ausnehmung 29 zur Erzielung eines größeren Quetschhubes vorgesehen.

Die Dichtlippe 25 weist ferner einen Verankerungsabschnitt 31 auf, der im gezeigten Ausführungsbeispiel im Querschnitt bogenförmig gestaltet ist und eine Querschnittsabmessung aufweist, die größer ist als ein den Verbindungsabschnitt 31 mit dem eigentlichen Dichtkörperabschnitt 33 der Dichtlippe 25 aufweisenden Verbindungsstück 35, wobei der ebenfalls in Parallelrichtung zur Verbindungs- oder Flanschprofilebene 5 verlaufende lichte Innenabstand der Sicke 15 ebenfalls größer ist als die entsprechende Breite der Einstecköffnung 15' der Sicke 15.

Im Bereich der Eck-Montagewinkel 3 ist die Sicke 21 lediglich als rückwärtige Abstützwand ausgebildet (Figur 6) und weist hier einen Öffnungsbereich auf, der quasi in der Äquatorebene des im Querschnitt kreisförmigen Verankerungsabschnittes 31 endet, so daß hier keine demgegenüber mit geringerem Breitenmaß ausgebildete Einstecköffnung 15' wie am Flanschprofil ausgebildet ist.

Die Kanalwand, d. h. die Kanalhaut oder -ummantelung 41 besteht aus einem folien-, gewebe- und/oder allgemein bahnförmigen Wandmaterial beispielsweise auch aus Gummi oder elastomerem Werkstoff, der als Meterware vorliegen kann.

In dem im Querschnitt im gezeigten Ausführungsbeispiel rund geformten Halte- oder Verankerungsabschnitt 31 ist noch eine weitere in zentraler Längsrichtung verlaufende Ausnehmung 37 eingebracht, um das Einsetzen dieses Verankerungsabschnittes in der Sicke 15 zu erleichtern.

Die Dichtlippe umfaßt einen auf der Kanalinnenseite 7 liegenden Verankerungsabschnitt 39, der im gewählten Ausführungsbeispiel in einem Winkel von vorzugsweise um 60° gegenüber der Erstrekkungsrichtung des Kanalteilstückes ausgerichtet ist und in der Verbindungs- oder Flanschebene 5 verläuft. Die Breite dieses Verankerungsabschnittes beträgt beispielsweise um 10 mm bis 40 mm, vorzugsweise um 15 mm bis 30 mm bevorzugt um 20 mm bis 25 mm. Er ist ungekrümmt ausgebildet. Daran ist die folien- bis gewebebahnförmige Haut oder Ummantelung 41 dicht angebracht, beispielsweise verklebt oder verschweißt, bevorzugt hochfrequenzverschweißt.

Ein so beschriebenes Kanalteilstück kann in beliebiger Größe problemlos hergestellt werden. Dazu müssen lediglich entsprechend den Maßvorgaben die vier Flanschprofile 1 in entsprechender Länge abgelängt und mittels des Eck-Montagewinkels 3 zu einem geschlossenen Rahmen verbunden werden. Bevorzugt in Form von Meterware vorhandenes Wandmaterial für die Ummantelung bzw. Haut 41 wird entsprechend zugeschnitten oder gestanzt, zu einem geschlossenen Schlauch geformt und im Bereich der Stoßkante oder in einem Überlappungsbereich fest miteinander, d. h. luftdicht miteinander verbunden. Dies kann beispielsweise durch Kleben, Schweißen sowie insbesondere Hochfrequenzschweißen erfolgen.

In den offenen Stirnbereichen des so gebildeten Kanalschlauches wird dann die Dichtlippe 25 längs ihres Verankerungsabschnittes 39 ebenfalls in geeigneter Weise luftdicht mit dem Schlauch 41 verbunden. Danach kann der jeweils stirnseitig vorgesehene Profilrahmen mit dem Kanalschlauch lediglich durch Einsetzen des Halteabschnittes 31 der Dichtlippe 5 in der umlaufend vorgesehenen Sicke 15, 21 verbunden werden.

Durch Zusammenfügen mehrer so gebildeter Kanalteilstücke kann eine völlig dichte Verbindung der einzelnen Kanalteilstücke erfolgen.

So vorgefertigte Kanalteilstücke können mit einem nachfolgend benachbarten Kanalteilstück verbunden werden, indem die Stirnseiten der Kanalteilstücke, d. h. die dort aus Profilen und Eck-Montagewinkeln zusammengefügten Rahmen unter Berührung der Riffelung 27 der Dichtlippe 25 aufeinandergelegt und mittels Gewindebolzen und Muttern fest miteinander verbunden werden, die durch entsprechende diagonal in den Eckwinkeln eingebrachten Langlöchern hindurchgesteckt werden können.

Um bei Bedarf die Stabilität und Kraftaufnahme an der Dichtlippe zu erhöhen, kann vorgesehen sein, daß in der Dichtlippe selbst, d. h. vor allem an deren Verankerungsabschnitt 39, ein Verstärkungsgewebe 43 eingebracht ist. Dieses Verstärkungsgewebe 43 kann bis in den Verbindungssteg 35 der Dichtlippe verlaufen und dort in einer parallelen Ebene zur Verbindungs- oder Flanschebene 5 enden und zwar bevorzugt zwischen der ersten und zweiten Quetschausnehmung 29 bzw. 37.

Abweichend von dem gezeigten Ausführungsbeispiel kann der Klemmbügel 9 auch so ausgebildet sein, daß der eigentliche Flanschabschnitt 21 an seinem zum Kanalinnenraum 7 gegenüberliegenden, also außenliegenden Ende direkt in den mit dem Winkel ausgerichteten Klemmbügelabschnitt 9c und dann in den sich daran anschließenden im Winkel geneigt ausgerichteten Klemmbügelabschnitt 9b übergehen.

Die gezeigte Ausführungsform jedoch weist hinsichtlich der Stabilität und Elastizität Vorteile auf.

Aus dem erläuterten Ausführungsbeispiel ist auch ersichtlich, daß der eigentliche Verankerungsabschnitt 31 der Dichtlippe 25 unmittelbar in Druckrichtung hinter dem davorliegenden Dichtkörperabschnitt 33 liegt, also somit der Verankerungsabschnitt zum Dichtabschnitt nicht seitlich versetzt angeordnet ist. Weitere Vorteile ergeben sich dadurch , daß die Dichtfläche, die durch die Längsriffelung 27 gegeben ist, an ihrer der Kanalinnenseite 7 zugewandten Begrenzungsseite unmittelbar in den Verankerungsabschnitt 39 übergeht. Dies bietet Vorteile auch im Hinblick auf die Kraftabstützung der Kanalhaut 41 an der Dichtlippe 25.

Das vorbeschriebene Herstellungsverfahren ist gleichermaßen auch dann anwendbar, wenn abweichend zu Figur 1 nicht gerade Flanschprofile 1 mittels separaten Eck-Montagewinkel 3 zu einem polygonalen Anschlußrahmen, sondern ein entsprechend kreisbogenförmig oder sonstwie bogenförmig gebildetes Flanschprofil 1 verwandt wird.

Nachfolgend wird auf die Ausführungsform gemäß den Figuren 7 und 8 Bezug genommen, welche sich von dem Ausführungsbeispiel gemäß den Figuren 1 bis 5 vor allem dadurch unterscheidet, daß der Eckwinkel 3 über keinen zwischen seinen Steckschenkeln 3' gebildeten Bogenabschnitt 51 (wie in Figur 5 dargestellt) verfügt. Die Steckschenkel 3' sind in entsprechender Polygonalform, im gezeigten Ausführungsbeispiel exakt rechtwinkelig zueinander verlaufend ausgerichtet und werden ansonsten in gleicher Weise, wie in Figur 2 dargestellt, am jeweiligen Flanschprofil 1 klemmend gehalten.

Mit dem Wegfall des Bogenabschnittes 51 ist an sich auch keine bogenförmige Sicke 21 bei diesem Eckwinkel vorgesehen. Der Eckwinkel 3 ist insoweit völlig eben und flach ausgebildet, ohne daß eine weitere Prägung oder ein weiteres Tiefziehen zur Ausbildung einer Sicke vorgenommen wurde.

Schließlich sind die beiden in jeder Ecke zusammenzufügenden Flanschprofile 1 im Eckbereich auf Gehrung geschnitten.

Dadurch geht vom Grundsatz her die Sicke 15 im Gehrungsbereich rechtwinkelig in die nächste Sicke 15 eines nächsten Flanschprofiles 1 über.

Um jedoch sicherzustellen, daß die in die Sicke 15 einzusetzende Dichtlippe 25 im Bereich des Gehrungsschnittes nicht rechtwinkelig umgelegt werden muß, ist - wie aus Figur 8 hervorgeht - vorgesehen, daß der Innenwandschnitt 53, der die Innenbegrenzung der Sicke 15 zum Kanalinnenraum 7 darstellt, vom Gehrungsschnittbereich ausgehend über eine gewisse Distanzlänge entfernt ist, wie dies durch den Pfeil 55 dargestellt ist. Dadurch läßt sich der Verankerungsabschnitt 31 der Dichtlippe 25, wie strichliert angedeutet ist, in einem gewissen Rundbogen von der einen in die nächste Sicke verlegen.

Auch bei dieser Ausführungsform läßt sich also insoweit zumindest bezüglich der Dichtlippe eine Art "Bogenabschnitt 51" erzielen, wie er bei dem Ausführungsbeispiel gemäß den Figuren 1 bis 5 in dem dort gezeigten spezifisch hierfür ausgerichteten Eck-Montagewinkel 3 von Hause aus vorgesehen ist.

Durch Weglassung des Innenwandabschnittes 53 im Eckbereich wird hier zwar die Dichtung nicht klemmend, sondern nur von hinten her gestützt gehalten. Allerdings ist dadurch sichergestellt, daß beim Zusammenbau mehrerer Kanalabschnitte die in die Sicke 15 eingelegte Dichtung ausreichend auf den Untergrund des Gegenflansches gedrückt wird, so daß auch bei dieser Konstruktion unter Verwendung lediglich eines gestanzten Eck-Montagewinkels 3 und bei mit auf Gehrung geschnittenen Flanschprofilen die gewünschte ausreichende Dichtung im Eckbereich erzielt wird.

Anhand von Figur 9 wird ferner noch erläutert, daß anstelle der in den anderen Ausführungsbeispielen gezeigten Dichtlippe 25 eine Rundschnur 25' als Dichtlippe 25 eingesetzt werden kann.

Die Rundschnur 25' kann ebenfalls aus geeignetem elastomerem Dichtmaterial bestehen, genauso aber auch aus nichtelastischem und dabei bevorzugt hoch hitzebeständigem Material gefertigt sein. Rundschnüre beispielsweise aus Stahlseilen sind insoweit genauso denkbar.

Insbesondere bei derartigen Materialien kann die Verbindung und Anbringung der Außenhaut, d.h. der Ummantelung 41, problematisch sein. Unter Bezugnahme auf Figur 9 wird für eine derartige Rundschnur 25' als Dichtlippe 25 vorgeschlagen, das in Kanallängsrichtung verlaufende stirnseitige Ende 42 der Ummantelung 41 in einem Randbereich 41' um die Dichtlippe 25 umzulegen und den umgelegten Abschnitt 42 mit dem vorlaufenden Bereich der Ummantelung 41 fest zu verbinden, beispielsweise zu verkleben oder zu verschweißen.

Nur der Vollständigkeit halber wird angenierkt, daß aber auch eine gemäß Figur 3 gezeigte Dichtlippe 25 in dem Ausführungsbeispiel gemäß den Figuren 7 und 8 mit auf Gehrung geschnittenen Flanschprofilen 1 eingesetzt werden kann.

Anhand von Figur 10 ist nur erläutert, daß das in der Figur 3 im Querschnitt gezeigte Dichtprofil in Abweichung zu der Ausführungsform gemäß Figur 3 auch so gestaltet sein kann, daß der Verankerungsabschnitt 39 nicht, wie im Ausführungsbeispiel gemäß Figur 3, winkelig zur Verbindungs- oder Flanschprofilebene 5, sondern parallel dazu ausgerichtet sein kann. Im unbelasteten Zustand ist die in Figur 10 teilweise im Längsschnitt gezeigte Ummantelung 41 mit der unbelasteten Dichtlippe 25 am Verankerungsabschnitt 39 fest verbunden. Zum Einsetzen in die Sicke 15 eines Flanschprofiles müßte dann die Dichtlippe 25 gemäß Figur 10 entgegen dem Uhrzeigersinn um 90° gedreht werden und entsprechend der Darstellung gemäß Figur 3 mit ihrem Halteabschnitt 31 in die Sicke 15 eingedrückt werden. Der Verankerungsabschnitt 39 würde dann diese Bewegung nur teilweise mitmachen und in Richtung der Zugbelastung durch die Haut 41 gemäß der Darstellung nach Figur 10 belastet werden, so daß auch bei dieser Ausführungsform im eingebauten Zustand der Dichtlippe in eine Position umgelegt bzw. umgebogen wird, die zumindest ähnlich derjenigen gemäß Figur 3 sein kann.

Abweichend zu den in den Figuren 1 bis 5 sowie Figur 10 gezeigten Ausführungsbeispielen kann die dort dargestellte Dichtlippe 25 aber auch mit einem integrierten Verankerungsabschnitt 39 versehen sein, der nicht von dem eigentlichen Dichtprofil bzw. dessen in die Sicke 15 einsetzenden Halteabschnitt 31 wegragen muß. Mit anderen Worten kann also der Verankerungsabschnitt an einem Umfangsbereich des eigentlichen Dichtlippen-Körpers ausgebildet sein.

## Patentansprüche

1. Kanalteilstück, insbesondere Lüftungs-Kanalteilstück, mit Kanalverbindungsstücken zur Verbindung mit einem nächsten Kanalteilstück, mit den folgenden Merkmalen
- die Kanalverbindungsstücke bestehen aus an den Enden eines Kanalteilstückes im wesentlichen in der Ebene quer zu dessen Erstreckungsrichtung verlaufenden Flanschprofilen (1),
- die Flanschprofile (1) sind mittels in den Eckbereichen des so gebildeten Anschlußflansches eingesetzten Eck-Montagewinkel (3) zu einem polygonalen, in der Regel rechteckförmigen Rahmen zusammengefügt,
- in Längsrichtung der Flanschprofile (1) ist jeweils eine Sicke (15) und vorzugsweise in Fortsetzung dazu in den Eck-Montagewinkel (3) in einem Teilbogenabschnitt (51) verlaufend eine weitere Sicke (17) ausgebildet,
- der Öffnungsbereich der Sicke (15, 17) weist in Richtung auf ein nächstfolgendes Kanalteilstück, und
- in die Sicke (15, 17) ist umlaufend eine Dichtlippe (25) eingesetzt
**gekennzeichnet durch** die folgenden weiteren Merkmale
- die Kanalteilstückes besteht aus einer folien-, gewebe- oder gummibahnförmigen oder -ähnlichen Kanalhaut (41),
- an einem Verankerungsabschnitt (39) der Dichtlippe (25) ist die Kanalhaut (41) dichtend angebracht, und
- die Kanalhaut (41) ist aus einer Materialbahn in entsprechender Größe hergestellt und zu einem in Umfangsrichtung geschlossenen Schlauch dicht zusammengefügt.

2. Kanalteilstück, insbesondere Lüftungs-Kanalteilstück, mit Kanalverbindungsstücken zur Verbindung mit einem nächsten Kanalteilstück, mit den folgenden Merkmalen
- die Kanalverbindungsstücke bestehen aus an den Enden eines Kanalteilstückes im wesentlichen in der Ebene quer zu dessen Erstreckungsrichtung und zu einem geschlossenen Bogen geformten Flanschprofilen (1),
- in Längsrichtung der Flanschprofile (1) ist jeweils eine Sicke (15) ausgebildet,
- der Öffnungsbereich der Sicke (15) weist in Richtung auf ein nächstfolgendes Kanalteilstück, und
- in die Sicke (15) ist umlaufend eine Dichtlippe (25) eingesetzt
**gekennzeichnet durch** die folgenden weiteren Merkmale
- die Kanalwand des Kanalteilstückes besteht aus einer folien-, gewebe- oder gummibahnförmigen oder -ähnlichen Kanalhaut (41),
- an einem Verankerungsabschnitt (39) der Dichtlippe (25) ist die Kanalhaut (41) dichtend angebracht, und
- die Kanalhaut (41) ist aus einer Materialbahn in entsprechender Größe hergestellt und zu einem in Umfangsrichtung geschlossenen Schlauch dicht zusammengefügt.

3. Kanalteilstück nach Anspruch 1 oder 2, **dadurch gekennzeichnet**, daß die Sicke (15) im unmittelbaren zur Innenseite des Kanals (7) weisenden Endbereich des Flanschprofils (1) ausgebildet ist.

4. Kanalteilstück nach einem der Ansprüche 1 bis 3, **dadurch gekennzeichnet**, daß der Öffnungsbereich der Sicke (15, 17) in Erstreckungsrichtung (6) des Kanalteilstückes weist und damit senkrecht zur Verbindungs- oder Flanschprofilebene (5) ausgerichtet ist.

5. Kanalteilstück nach einem der Ansprüche 1 bis 4, **dadurch gekennzeichnet**, daß der Verankerungsabschnitt (39) zur dichten Befestigung und Verankerung der Kanalhaut (41) an der Dichtlippe (25) winklig zu Erstreckungsrichtung (6) des Kanalteilstückes und damit auch winklig zur senkrecht dazu stehenden Verbindungs- oder Flanschprofilebene (5) ausgerichtet ist.

6. Kanalteilstück nach Anspruch 5, **dadurch gekennzeichnet**, daß der Verankerungsabschnitt (39) im unbelasteten Zustand parallel zur Dichtfläche bzw. Verankerungs- oder Flanschprofilebene (5) ausgerichtet ist.

7. Kanalteilstück nach Anspruch 5, **dadurch gekennzeichnet**, daß der Verankerungsabschnitt (39) einen Neigungswinkel zur Verbindungs- oder Flanschprofileebene (5) von 30° bis 80°, vorzugsweise 45° bis 75° bildet.

8. Kanalteilstück nach einem der Ansprüche 5, 6 oder 7, **dadurch gekennzeichnet**, daß der Neigungswinkel des Verankerungsabschnittes (39) 55° bis 65°, vorzugsweise um 60° gegenüber der Verbindungs- oder Flanschprofilebene (5) beträgt.

9. Kanalteilstück nach einem der Ansprüche 1 bis 8, **dadurch gekennzeichnet**, daß die Kanalhaut (41) mit der Dichtlippe (25) verklebt, verschweißt, vorzugsweise hochfrequenzverschweißt ist.

10. Kanalteilstück nach einem der Ansprüche 1 bis 9, **dadurch gekennzeichnet**, daß die Kanalhaut (41) und die Dichtlippe (25) einstückig ausgebildet sind.

11. Kanalteilstück nach einem der Ansprüche 1 bis 10, **dadurch gekennzeichnet**, daß in dem eigentlichen Dichtkörperabschnitt (33) und/oder in dem Verankerungsabschnitt (39) der Dichtlippe (25) ein Verstärkungsgewebe (43) integriert ist.

12. Kanalteilstück nach Anspruch 11, **dadurch gekennzeichnet**, daß das Verstärkungsgewebe (26) im Verankerungsabschnitt (39) bevorzugt in einer Mittelebene und im eigentlichen Dichtkörperabschnitt (33) in einem mittleren Bereich zwischen der Dichtfläche und einem in der Sicke (15, 17) rückwärtig liegenden Halteabschnitt (31) verläuft.

13. Kanalteilstück nach Anspruch 12, **dadurch gekennzeichnet**, daß in dem außerhalb des Halteabschnittes (31) ausgebildeten Dichtkörperabschnittes (33) der Dichtlippe (25) ein Quetschhohlraum (29) ausgebildet ist.

14. Kanalteilstück nach Anspruch 12 oder 13, **dadurch gekennzeichnet**, daß in dem in der Sicke (15, 17) gehaltenen bzw. abgestützten Halteabschnitt (31) der Dichtlippe (25) ein Quetschhohlraum (37) ausgebildet ist.

15. Kanalteilstück nach einem der Ansprüche 1 bis 14, **dadurch gekennzeichnet**, daß die Dichtfläche eine in Längsrichtung der Dichtfläche verlaufende Riffelung (27) unter Ausbildung von Längsrippen aufweist.

16. Kanalteilstück nach einem der Ansprüche 1 bis 15, **dadurch gekennzeichnet**, daß der Verankerungsabschnitt (39) 10 mm bis 40 mm, vorzugsweise 15 mm bis 30 mm, insbesondere 20 mm bis 25 mm breit ist.

17. Kanalteilstück nach einem der Ansprüche 1 oder 3 bis 16, **dadurch gekennzeichnet**, daß gegenüberliegend zum eigentlichen Kanalinnenraum (7) das Flanschprofil (1) in einen Klemmbügel (9) übergeht, worüber auf der rückwärtigen Seite ein Steckschenkel (3') des Eck-Montagewinkels (3) parallel zum Flanschprofil (1) verankerbar ist.

18. Kanalteilstück nach Anspruch 17, **dadurch gekennzeichnet**, daß der Klemmbügel (9) einen in Querschnittdarstellung leicht dachförmigen und mit seinem Dachfirst in Richtung der Sicke (15) liegend ausgebildeten Klemmbügelabschnitten (9b, 9c) aufweist, worüber der Steckschenkel 3' des Eck-Montagewinkels (3) nach Art eines Klippverschlusses zwischen diesem Klemmbügel (9) und vorzugsweise der gegenüberliegenden Außenwand der Sicke (15) klemmbar gehalten ist.

19. Kanalteilstück nach einem der Ansprüche 1 bis 18, **dadurch gekennzeichnet**, daß die Dichtlippe (25) aus einer in die Sicke (15; 17) einsetzbaren Rundschnur (25') besteht.

20. Kanalteilstück nach Anspruch 19, **dadurch gekennzeichnet**, daß die Rundschnur (25') aus elastomerem Material besteht.

21. Kanalteilstück nach Anspruch 19, **dadurch gekennzeichnet**, daß die Rundschnur (25') aus unelastischem Material besteht, insbesondere aus einem Stahlseil gebildet ist.

22. Kanalteilstück nach einem der Ansprüche 1 oder 3 bis 21, **dadurch gekennzeichnet**, daß die Flanschprofile (1) in den Eckbereichen auf Gehrung geschnitten und zusammengefügt sind, und daß im Bereich des Gehrungsschnittes an der zum Kanalinnenraum (7) liegenden Sickenwandbereich der Innenwandabschnitt (53) über eine vorbestimmte Länge unter Ermöglichung einer natürlichen Bogenführung für die Dichtlippe (25, 25') weggelassen ist.

23. Kanalteilstück nach einem der Ansprüche 1 bis 22, **dadurch gekennzeichnet**, daß die Kanalhaut (41) um die Dichtlippe (25) umgelegt und unter Bildung einer Tasche mit dem angrenzenden Material der Kanalhaut (41) dichtend verbunden ist.

## Claims

1. Duct-section, especially ventilating-duct-section with duct-joint for connection with an adjacent duct-section, with the following characteristics
- the duct-joints consist of profiled-flange-bars (1) at the ends of a duct-section essentially situated in the plane across to its extension,
- the profiled-flange-bars (1) are joint together to a polygonal, as a rule rectangular frame, by means of corner-fittings (3) inserted at the corner-sections of a so formed connection-flange.
- a groove (15) is formed respectively in longitudinal direction of the profiled-flange-bars (1) and preferably a further groove (17) in extension thereof in the corner-fittings (3) extending into an arc-section (51),
- the opening-section of the groove (15, 17) points to the direction of an adjacent duct-section, and
- a circulating sealing-strip (25) is inserted into the groove (15, 17),
characterised by the following further features
- the duct-wall of the duct-section consists of foil-, webbing- or rubber-sheeting alike or - similar ductskin (41),
- the ductskin (41) is tightly connected to an anchoring section (39) of the sealing-strip (25), and
- the ductskin (41) is made of sheeting in according size and tightly joined to, in the direction of the circumference closed pipe.

2. Duct-section, especially ventilating-duct-section with duct-joints for connection with an adjacent duct-section, with the following characteristics
- the duct-joints consist of profiled-flange-bars (1) located at the ends of a duct-section essentially situated in the plane across to its extension , and forming a closes arc.
- a groove (15) is constructed respectively in the longitudinal directions of the profiled-flange-bars (1)
- the opening-section of the groove (15) points to the direction of an adjacent duct-section, and
- a circulating sealing-strip (25) is inserted into the groove (15),
characterised by the following further features
- the duct-wall of the duct-section consists of foil-, webbing- or rubber sheeting alike or similar skin (41)
- the ductskin (41) is tightly connected to an anchoring section (39) of the sealing-strip (25), and
- the ductskin (41) is made of sheeting in according size and tightly joined to an, in the direction of the circumference closed pipe.

3. Duct-section as per claim 1 or 2, thus characterised that the groove (15) is constructed into the end-section of the profiled-flange-bars (1) which point directly to the inside of the duct (7).

4. Duct-section as per one of the claims 1 through 3, thus characterised that the opening section of the groove (15, 17) points to the direction (6) of the extension of the duct, and is therefore aligned perpendicular to the plane (5) of the joint- or profiled-flange-bars.

5. Duct-section as per one of the claims 1 through 4, thus characterised that the anchoring section (39) for the tight fixation and anchoring of the ductskin (41) into the sealing-strip (25) angular to the direction of the extension (6) of the duct-section, and therefore angular to the perpendicular to it extending connection- or profiled-flange-bar-plane (5) aligned is.

6. Duct-section as per claim 5 thus characterised that the anchoring section (39) is parallel aligned to the plane of the sealing-surface, and to the anchoring- or profiled-flange-bar plane (5) respectively when in unstressed condition.

7. Duct-section as per claim 5 thus characterised that the anchoring section (39) forms an angle of inclination to the joint- or profiled-flange-bar-plane (5) of 30° to 80°, preferably 45° to 75°

8. Duct-section as per one of the claims 5, 6 or 7 thus characterised that the angle of inclination of the anchoring-section (39) is 55° to 65°, preferably 60° opposite to the binding- or profiled-flange-bar-plane (5).

9. Duct-section as per one of the claims 1 through 8 thus characterised that the ductskin (41) is bonded, welded, preferably high frequency heat sealed to the sealing-strip (25).

10. Duct-section as per one of the claims 1 through 9 thus characterised that the ductskin (41), and the sealing-strip (25) are constructed as one piece.

11. Duct-section as per one of the claims 1 through 10 thus characterised that a reinforcing webbing (43) is integrated into the actual sealing-body-section (33) and/or into the anchoring-section (39) of the sealing-strip (25).

12. Duct-section as per claim 11 thus characterised that a reinforcing webbing (26) extends through the anchoring-section (39) and preferably trough a middle-plane of the actual sealing-body (33) in a middle-range between the sealing-surface into an in the groove (15, 17) backwardly situated holding-section (31).

13. Duct-section as per claim 12 thus characterised that a hollow squeezer space (29) is constructed into the outside the holding-section (31) situated sealing-body-section (33) of the sealing-strip (25).

14. Duct-section as per claim 12 or 13 thus characterised that a hollow squeezer space (37) is constructed into the holding-section (31) of the sealing-strip (25) which is held and supported respectively within the groove (15, 17).

15. Duct-section as per one of the claims 1 through 14 thus characterised that the sealing-surface shows a corrugation (27) extending in longitudinal direction of the sealing-surface under formation of longitudinal fins.

16. Duct-section as per one of the claims 1 through 15 thus characterised that the anchoring-section (39) has a width of 10 mm to 40 mm, preferably 15 mm to 30 mm, especially 20 mm to 25 mm.

17. Duct-section as per one of the claims 1 or 3 through 16 thus characterised that the profiled-flange-bar (1) extends into a clamping-strap (9) opposite to the actual duct inside space (7) over which backwardly a pluggable member (3') of the corner-fitting (3) can be anchored parallel to the profiled-flange-bar (1).

18. Duct-section as per claim 17 thus characterised that the clamping-strap (9) in its sectional projection slightly recessed is, and with its recessed in the direction of the groove (15) extending clamping-strap (9b, 9c) constructed is whereby the pluggable member (3') of the corner-fitting (3) is held in the way of a clip-on lock between this clamping-strap (9) and preferably the opposite outside walls of the groove (15).

19. Duct-section as per one of the claims 1 through 18 thus characterised that the sealing-strip (25) consists of a round cord (25') insertable into the groove (15; 17).

20. Duct-section as per claim 19 thus characterised that the round cord (25') consists of elastomere material.

21. Duct-section as per claim 19 thus characterised that the round cord (25') consists of inelastic material especially of wire cable.

22. Duct-section as per one of the claim 1 or 3 through 21 thus characterised that the profiled-flange-bars (1) are miter cut and joined together in the corner sections, and that in the area of the miter-cut and the groove-wall-section facing the inner space of the duct (7) the inner-wall-section (53) is omitted over an allotted length such allowing a natural arc-formation for the sealing-strip (25,25').

23. Duct-section as per one of the claims 1 through 22 thus characterised that the ductskin (41) is folded around the sealing-strip (25), and under the formation of a pleat tightly to the bordering material of the ductskin (41) connected is.

## Revendications

1. Section de canal, plus particulièrement section de canal de ventilation avec pièces d'assemblage de sections de canal pour l'assemblage avec une prochaine section de canal, avec les caractéristiques suivantes:
- les pièces d'assemblage de sections de canal se composent de profils de flasque (1) situés essentiellement aux extrémités d'une section de canal, en travers, pour son extension,
- les profils de flasque (1) sont joints ensemble en un polygone, en général, un cadre de forme rectangulaire au moyen d'une équerre de montage d'angle(3), dans les sections angulaires de la flasque de liaison ainsi formée,
- une rainure (15) est formée respectivement en direction longitudinale des profils de flasque (1) et de préférence une autre rainure (17) en continuation de ceci dans l'équerre de montage d'angle (3) en un arc de courbe (51),
- le domaine d'ouverture de la rainure (15,17) montre la direction d'une prochaine section de canal, et
- un joint (25) est inséré dans la rainure (15,17),
**caractérisés** par les autres marque distinctives suivantes:
- la paroi de canal de la section de canal se compose d'une paroi de canal (41) faite d'une bande de plastique, de tissu ou de caoutchouc ou matériel identique,
- la paroi de canal (41) est fixée de façon étanche à une section d'ancrage (39) du joint (25), et
- la paroi de canal (41) est faite d'une bande aux dimensions correspondantes et assemblée de façon étanche à un tuyau fermé dans la direction de circonférence.

2. Section de canal, plus particulièrement section de canal de ventilation avec pièces d'assemblage de sections de canal pour l'assemblage avec une prochaine section de canal, avec les caractéristiques suivantes:
- les pièces d'assemblage de sections de canal se composent de profils de flasque (1), situés essentiellement aux extrémités d'une section de canal, en travers, pour son extension et formant un arc fermé,
- une rainure (15) est formée respectivement en direction longitudinale des profils de flasque (1),
- le domaine d'ouverture de la rainure (15) désigne la direction d'une prochaine section de canal, et
- un joint (25) est inséré dans la rainure (15),
**caractérisés** par les autres marques distinctives suivantes:
- la paroi de canal de la section de canal se compose d'une paroi de canal (41) faite d'une bande de plastique, de tissu ou de caoutchouc ou matériel identique,
- la paroi de canal (41) est fixée de façon étanche à une section d'ancrage (39) du joint (25), et
- la paroi de canal (41) est faite d'une bande aux dimensions correspondantes et assemblée de façon étanche à un tuyau fermé dans la direction de circonférence.

3. Section de canal selon revendication 1 ou 2, **caractérisée par le fait** que la rainure (15) est formée dans la section finale du profil de flasque (1) désignant directement le côté intérieur du canal.

4. Section de canal selon une des revendications 1 à 3, **caractérisée par le fait** que le domaine d'ouverture de la rainure (15,17) indique la direction d'extension (6) de la section de canal et de ce fait est aligné perpendiculairement au plan de liaison ou de profil de flasque (5).

5. Section de canal selon une des revendications 1 à 4, **caractérisée par le fait** que la section d'ancrage (39) est alignée à la fixation étanche et à l'ancrage de la paroi de canal (41) au joint (25) angulairement en direction d'extension (6) de la section de canal et de ce fait aussi angulairement au plan de liaison ou profil de flasque (5) perpendiculaires à ceux-ci.

6. Section de canal selon revendication 5, **caractérisée par le fait** que la section d'ancrage (39) est alignée parallèlement, dans un état sans charge, à la surface étanche ou selon le cas au plan d'ancrage ou de profil de flasque (5).

7. Section de canal selon revendication 5, **caractérisée par le fait** que la section d'ancrage (39) forme un angle d'inclinaison vers le plan de liaison ou de profil de flasque (5) de 30° à 80°, de préférence de 45° à 75°.

8. Section de canal selon une des revendications 5, 6, ou 7, **caractérisée par le fait** que l'angle d'inclinaison de la section d'ancrage (39) est de 55° à 65°, de préférence de 60° par rapport au plan de liaison ou de profil de flasque (5).

9. Section de canal selon une des revendications 1 à 8, **caractérisée par le fait** que la paroi de canal (41) est collée, soudée, de préférence soudée à la haute-fréquence avec le joint (25).

10. Section de canal selon une des revendications 1 à 99, **caractérisée par le fait** que la paroi de canal (41) et le joint (25) sont formés d'une seule pièce.

11. Section de canal selon une des revendications 1 à 10, **caractérisée par le fait** qu 'un tissu de renforcement (43) est intégré dans la section d'étanchéité (33) et / ou dans la section d'ancrage (39) du joint (25).

12. Section de canal selon revendication 11, **caractérisée par le fait que** le tissu de renforcement (26) s'étend dans la section d'ancrage (39) et de préférence dans une surface centrale de la section d'étanchéité (33) dans un domaine central entre la surface étanche et une section de fixation (31) se trouvant à l'arrière de la rainure (15, 17).

13. Section de canal selon revendication 12, **caractérisée par le fait** qu'à l'extérieur de la section de fixation (31), un joint creux d'écrasement (29) est formé dans la section d'étanchéité (33) du joint (25).

14. Section de canal selon revendication 12 ou 13, **caractérisée par le fait** qu' un joint creux d'écrasement (37) est formé dans la section de fixation (31) du joint (25), maintenu ou , selon le cas, soutenu dans la rainure (15,17).

15. Section de canal selon une des revendications 1 à 14, **caractérisée par le fait** que la surface étanche montre des cannelures (27) s'étendant en direction longitudinale de la surface étanche, sous la formation d'arêtes longitudinales.

16. Section de canal selon une des revendications 1 à 15, **caractérisée par le fait** que la section d'ancrage (39) est large de 10 mm à 40 mm, de préférence 15 mm à 30 mm, en particulier 20 mm à 25 mm.

17. Section de canal selon une des revendications 1 ou 3 jusqu'à 16, **caractérisée par le fait** que le profil de flasque (1) s'étend dans la partie intérieure du canal dans une pince de serrage (9), par où le côté tenon (3') de l'équerre de montage d'angle peut être ancré parallèlement au profil de flasque (1) sur la face arrière.

18. Section de canal selon revendication 17, **caractérisée par le fait** que la pince de serrage (9) montre dans une représentation en coupe légèrement en forme de toit avec son faîte en direction de la rainure (15), la section de la pince de serrage, par où le côté tenon (3') de l'équerre de montage d'angle (3) est tenu pressé à la façon d'une fermeture-clip entre cette pince de serrage (9) et de préférence la paroi extérieure de la rainure (15) située en face.

19. Section de canal selon une des revendications 1 à 18, **caractérisée par le fait** que le joint (25) consiste en une corde ronde (25') insérée dans la rainure (15,17).

20. Section de canal selon revendication 19, **caractérisée par le fait** que la corde ronde (25') est faite en matériel élastomère..

21. Section de canal selon revendication 19, **caractérisée par le fait** que la corde ronde (25') est faite en matériel non élastique, en particulier formée d'un câble métallique.

22. Section de canal selon une des revendications 1 ou 3 jusqu'à 21, **caractérisée par le fait** que les profils de flasque (1) sont taillés en onglets, dans les sections angulaires et joints ensemble, et que la section de la paroi intérieure (53) vers la partie intérieure du canal (7) est laissée de côté, dans un domaine de coupe d'onglets, sur une longueur prévue à l'avance pour la réalisation d'un rayon de courbure naturel pour le joint (25, 25').

23. Section de canal selon une des revendications 1 à 22, **caractérisée par le fait** que la paroi de canal (41) est enveloppée autour du joint (25) et reliée de façon étanche, sous la formation d'une poche, au matériel avoisinant la paroi de canal (41).
